**Europäisches Patentamt**

**European Patent Office**

**Office européen des brevets**

(19)

(11) Publication number: **0 013 702**
**A1**

# EUROPEAN PATENT APPLICATION

(12)

(21) Application number: **79104459.7**

(22) Date of filing: **12.11.79**

(51) Int. Cl.³: **G 01 M 15/00, G 01 L 23/10,
G 01 L 23/22**

(30) Priority: **14.11.78 US 960590
14.11.78 US 960600
29.01.79 US 7347**

(43) Date of publication of application: **06.08.80
Bulletin 80/16**

(84) Designated Contracting States: **DE FR GB**

(71) Applicant: **Creative Tool Company Corp., 4344 Lawndale
Ave., Lyons Illinois 60534 (US)**

(72) Inventor: **Dooley, Daniel J., 112 Carriage Way Drive, Burr
Ridge Illinois 60521 (US)**
Inventor: **Dooley, Terrence L., 559 West Roscoe Street,
Chicago Illinois 60657 (US)**
Inventor: **Dooley, Joseph L., 2753 West 84th Street,
Chicago Illinois 60652 (US)**

(74) Representative: **Dres. Kador & Klunker,
Knöbelstrasse 36, D-8000 München 22 (DE)**

(54) **Transducers for detecting pressure changes and their utilisation in a cylinder monitoring system.**

(57)   Disclosed is a transducer assembly and diagnostic apparatus for processing an electrical signal which varies with the pressure changes occurring within an engine cylinder. The transducer assembly (100) consists of a U-shaped structure (104) integrally formed in a sandwich arrangement and encompassing a pressure-responsive crystalline element (106). The assembly is sized such that it substantially encompasses the shank (92) of a spark or glow plug (90) of the engine such that axial forces from within the cylinder excite the transducer through the plug to produce a signal which is processed in an electrical circuit to provide timing or other diagnostic information.

**TITLE MODIFIED**
see front page

CYLINDER MONITORING SYSTEM

FIELD OF THE INVENTION

This invention is generally related to diagnostic systems for internal combustion engines and more particularly concerns diagnostic systems which utilize pressure-related signals from the engine cylinders.

BACKGROUND OF THE INVENTION

With the increasing popularity of fuel injection in both diesel and carbureted engines and with the increased emphasis on gas mileage and emission controls, the need to derive accurate information concerning the performance of each engine cylinder has rapidly increased. However, until recent years, great difficulty has been encountered in attempts to obtain accurate information concerning the internal performance of the cylinder during the combustion process. Numerous transducers have recently been devised by the applicant and others for developing the necessary signals from the engine cylinder to be used for diagnostic purposes. For example, U. S. Patent No. 4,036,050 of applicant Joseph Dooley and Edward Yelke discloses transducers which operate in conjunction with the hold-down apparatus for injector nozzles of the type utilizing clamps or dogs to hold the nozzle in seating engagement with the engine block or head or in conjunction with a screw-in type injector nozzle of the type which is threaded into the

-2-

engine housing or otherwise secured to the housing by screw-type fittings which are coaxial with the nozzle itself. In some engines, however, the nozzle apparatus is not readily accessible or is of such a shape and size as to make it difficult to adapt existing transducer structures to it. The applicants have discovered that pressure variations from within the cylinder can be alternately detected through the aperture normally provided for glow plugs in many diesel engines or for spark plugs in carbureted engines. Diesel glow plugs are threaded through the engine walls into the combustion or pre-combustion chamber to provide heat from an electrical filament to warm the chamber and thereby enhance the ignition and combustion within the cylinder during cold starting.

For diesel or carbureted engines using such glow or spark plugs, applicants have developed apparatus and methods for utilizing the glow plug aperture to monitor internal engine performance while the engine is fully operative in its dynamic state. This development stems from the discovery that a force change results at the interface of the plug and the engine outer surface during each compression stroke of the engine and that this force change is detectable through a piezoelectric device mounted at or near this interface in a particular configuration. More specifically, the applicants have developed alternate embodiments of a transducer assembly, one of which screws into the engine block in the receptacle normally provided for the engine glow plug. A second embodiment of the transducer eliminates the need for removal of the glow plug while still making possible the detection of pressure variations within the cylinder that are reflected through the passage normally provided for the glow plug. As such, the transducers of the present invention provides for dynamic timing of the engine at all times and temperatures and under any conditions existing in the field or the laboratory. In addition, one embodiment of the transducers of the present invention may, if desired, be permanently attached to the engine to continuously provide information from the engine cylinder to on-board monitoring or control apparatus.

Other transducers for developing pressure-related information from the cylinder through specially modified plugs have been disclosed in the 1978 SAE Journal No. 0098-2571/8605-0054. These transducers have not found wide applicability in that they generally require modifications to existing engine components and are suited primarily for the laboratory.

It is a general object of the present invention to overcome the drawbacks and deficiencies of the prior transducers and diagnostic systems through the provision of a transducer assembly which is specially adapted for use with glow plugs and spark plugs of the screw-in or threaded type.

It is a related object of the invention to provide a transducer and diagnostic system which can be utilized dynamically to develop information concerning the activity within the cylinder during normal operation of the engine, at all times and temperatures and under any conditions existing in the field or laboratory.

It is still a further object of the present invention to provide a diagnostic system which is economical to build and easy to use both in the laboratory and in the field.

It is still a further object of the invention to provide a transducer assembly and associated circuitry which is adaptable to a wide variety of different engines and which can be installed in a permanent or semi-permanent fashion for continuous use within the vehicle.

-4-

## SUMMARY OF THE INVENTION

These and other objects of the present invention are achieved through a transducer design which utilizes a suitably shaped plane of piezoelectric material in close proximity with the interface between the engine itself and the portion of the plug which seats against the engine face around the entrance to the plug aperture. A first embodiment of the transducer has the shape of a generally U-shaped wafer or sandwich for insertion around a spark or glow plug. The transducer has a piezoelectric crystalline slab located between protective surfaces and develops an output signal in proportion to changes in the mechanical stress exerted thereon. The thickness of the transducer is such that when the transducer is inserted between the engine and the enlarged hex flanges of the glow plug, the glow plug seats against the transducer rather than against the internal recesses of the engine and, accordingly, pressure changes developed within the cylinder are transmitted directly to the piezoelectric element to develop an extremely sensitive signal representative of those pressure changes. Since the glow plug remains tightly fitted into the compression head during use of the transducer, normal operation of the engine and the glow plug continues while signals are being developed by the transducer. A transducer having a U-shaped configuration is especially well adapted to be quickly and easily inserted on and removed from the glow plug without removal of the plug itself. An alternate embodiment of the glow plug or spark plug transducer system of the present invention comprises a plug specially adapted to replace the conventional spark or glow plug for one or more cylinders. This specially adapted plug has a piezoelectric element mounted internally in a plane near the interface between the plug and the engine. The signal from the piezo element is removed through a conductive rubber plug encapsulated in an insulating rubber shield

-5-

internal to the transducer housing. The circuitry associated with the transducers is especially adapted to utilize the information available on the cylinder pressure change signal including the oscillations developed during opening of the injector nozzle. Various alternative timing and control devices are disclosed below.

For a more complete understanding of this invention reference should now be made to the embodiment illustrated in greater detail in the accompanying drawings and described below by way of examples of the invention.

## BRIEF DESCRIPTION OF THE DRAWINGS

FIG. 1 is a partial cross section of a view of the cylinder head assembly of a conventional diesel engine having a glow plug inserted for ignition and warm-up and with one embodiment of the transducer assembly inserted around the glow plug.

FIG. 2 is an enlarged perspective view of the transducer assembly shown in FIG. 1.

FIG. 3 is an enlarged cross sectional view of the transducer assembly shown in FIG. 2 taken along the line 3-3.

FIG. 4 is a curve illustrating the signal relationship of pressure and time within the diesel cylinder and information detectable by the transducer assembly shown in FIGS. 1-3.

FIG. 5 is a block diagram of an electrical circuit and read out apparatus for processing the electrical signal derived from the transducer of FIGS. 1-3.

FIGS. 6 and 7 depict an alternate form of the spark or glow plug transducer in perspective and cross sectional views, respectively.

-6-

It should be understood that the drawings are not necessarily to scale and that the embodiments are sometimes illustrated by graphic symbols, phantom lines, diagrammatic representations and fragmentary views. In certain instances, details which are not necessary for an understanding of the present invention or which render other details difficult to perceive may have been omitted. It should be understood, of course, that the invention is not necessarily limited to the particular embodiments illustrated herein.

### DETAILED DESCRIPTION OF THE DRAWINGS
### INCLUDING PREFERRED EMBODIMENTS

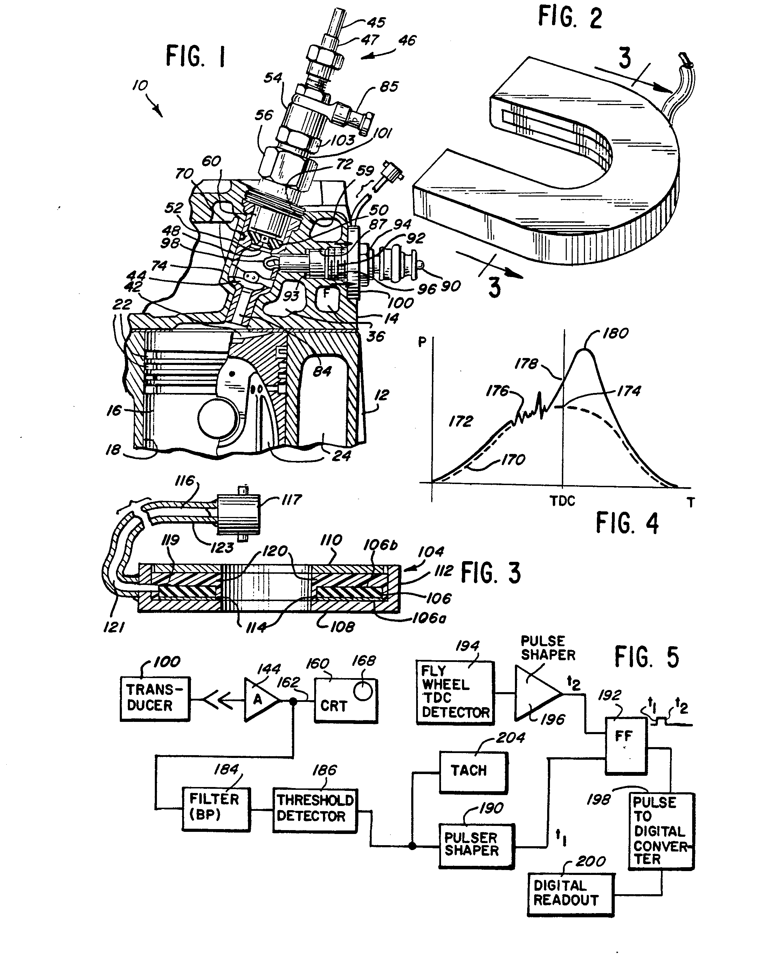

Turning first to FIG. 1, there is shown a section of a typical diesel engine 10 which consists generally of a block assembly 12 and compression head 14. The block is shown cut away to reveal a piston 16 which operates in a cylinder 18. The piston is coupled to a crankshaft (not shown) via a connecting rod and has a plurality of rings 22 which operate in a conventional manner to maintain compression and enhance lubrication within the cylinder 18.

The compression head 14 includes an air intake system (not shown) which provides air for the combustion process through the operation of a conventional valve mechanism which opens and closes an air inlet port under the control of appropriate linkage driven by other components of the engine. The compression head 14 also houses passages 36 for water or coolant flow to control the temperatures developed within the compression head. An airtight seal to define a combustion chamber 42 which expands and contracts in volume with vertical movement of the piston 16 within the cylinder 18 is formed by coupling the head 14 to the block assembly 12 by appropriate bolts and gaskets.

Fuel is provided to the pre-combustion chamber 44 of each cylinder by a fuel injector pump (not shown) through a fuel line 45 and screw-type nozzle assembly 46. The fuel line 45 is attached to the inlet 47 of the nozzle assembly 46.

The nozzle assembly 46 carries fuel from the fuel line to an inlet port 48 of the pre-combustion chamber 44. At the fuel inlet port 48 into the pre-combustion chamber is an injector gasket 50, typically in the form of a copper or brass washer surrounding a protruding portion or orifice 52 at the tip of the nozzle assembly 46.

There is depicted in the embodiment of FIG. 1 a screw-in type nozzle assembly 46 having a body portion 54 with an expanded hex portion 56, a threaded shank portion 59 and an injection valve assembly 60. For the purpose of seating the screw-type nozzle assembly 46 in sealing engagement with the inlet port 48 of the pre-combustion chamber 44 there is provided a nozzle assembly receptacle 70 having a threaded portion 72 in the compression head 14 and adapted to enter into a screw-type engagement with the threaded shank portion 58 of the nozzle assembly 46 and to thereby maintain axial pressure thereon. The nozzle hex portion 56 is integral with the threaded shank portion 58 and is a convenient means for gripping the nozzle assembly 46 as it is screwed into engagement with the threaded portion 72 of the receptacle 70.

A pre-combustion housing 74 is compression fitted into the inner part of the receptacle 70. The nozzle assembly 46 is inserted into the receptacle 70 and extends toward the pre-combustion housing 74. The nozzle assembly 46 is screwed into the receptacle 70 until its forward end seats against the fuel inlet port 48. The remaining space within the pre-combustion housing 74 serves as the pre-combustion chamber 44, and a channel 84 connects the pre-combustion chamber 44 to the combustion chamber 42.

The nozzle assembly 46 may be any of a variety of different types. Typically, injector nozzles include an internal spring-loaded valve which is hydraulically opened by the fuel provided by the pump as the pressure exerted by that fuel exceeds a predetermined minimum level. As such, the nozzle assembly isolates the fuel line from pressures created in the pre-combustion chamber 44 during most of the combustion cycle. Although not relevant to the present invention, it is noted that most injector nozzles additionally provide a metering function in that the volume of fuel for a given injection cycle is carefully controlled and excess fuel supplied by the pump is bypassed back to the fuel supply through a return line 85 shown in FIG. 1.

As shown in FIG. 1, a second receptacle 87 formed in the head 14 is adapted to accept a glow plug 90. The glow plug 90 has a partially threaded shank portion 92 of gradually reduced diameters extending into the pre-combustion chamber 44. The plug also has an expanded head portion 94. The receptacle 87 extends from the pre-combustion chamber 44 to the outside of the compression head 14 and includes a threaded portion 96 for a screw-type engagement with the threaded portion 92 of the plug shank. The glow plug 90 is screwed into the receptacle 87 until the plug seats, as will be described in greater detail below. A filament 98 at the forward end of the glow plug 90 is electrically coupled by means of a conductor (not shown) within the glow plug 90 to a suitable electrical power source. The activated filament 98 heats the air within the pre-combustion chamber 44 and thereby assists in igniting the fuel in cold weather when diesel engines often experience starting problems.

In normal operation of the diesel described, air supplied to the cylinder 18 through the air inlet port is compressed during upward movement of the piston 16. After closure of the air inlet port but while compression is still increasing within the cylinder 18, the injector pump supplies fuel to the fuel line. When the pressure of the fuel within the fuel line is sufficient to open the spring-loaded valve in the nozzle assembly 46, ejection of fuel into the pre-combustion chamber 44 and from there into the combustion chamber 42 begins. The combination of heat and pressure within the combustion chamber 42 ignites the fuel, resulting in a still further and more rapid increase in pressure to begin the power stroke which forces the piston 16 downward in the cylinder 18.

In accordance with the present invention, means are provided to monitor these pressure changes within the pre-combustion chamber 44 so as to provide an electrical signal which is useful in monitoring engine performance or performance within the individual cylinder. More specifically, a transducer assembly 100 of appropriate sensitivity is coupled to the glow plug 90. Axial forces on the transducer assembly 100 created by pressure changes within the pre-combustion chamber 44 are thereby detected external to the engine housing to facilitate convenient and economical performance monitoring. More specifically, the stress transducer 100 of the embodiment depicted in FIG. 1 is inserted around the shank 92 of the glow plug 90 between the enlarged hex portion 94 and the lateral face of the compression head.

As shown in more detail in FIGS. 2 and 3, the transducer 100 is in the form of U-shaped structure having a metal housing 104 surrounding a U-shaped disc 106 of piezoelectric material. The transducer 100 is sized to fit around the glow plug 90 as described above, i.e., the opening between the legs of the U-shaped housing is sufficiently wide to straddle the shank portion of the glow plug while being sufficiently narrow to ensure that the housing is substantially overlapped by the enlarged hex portion of the plug assembly. This ensures that the transducer 100 is compressed between the enlarged head portion and the engine face. The housing 104 has interconnected bottom 108, top 110 and side members 112. The disc 106 of piezoelectric material is connected to the bottom 108 of the housing 104 by a conductive adhesive layer 114.

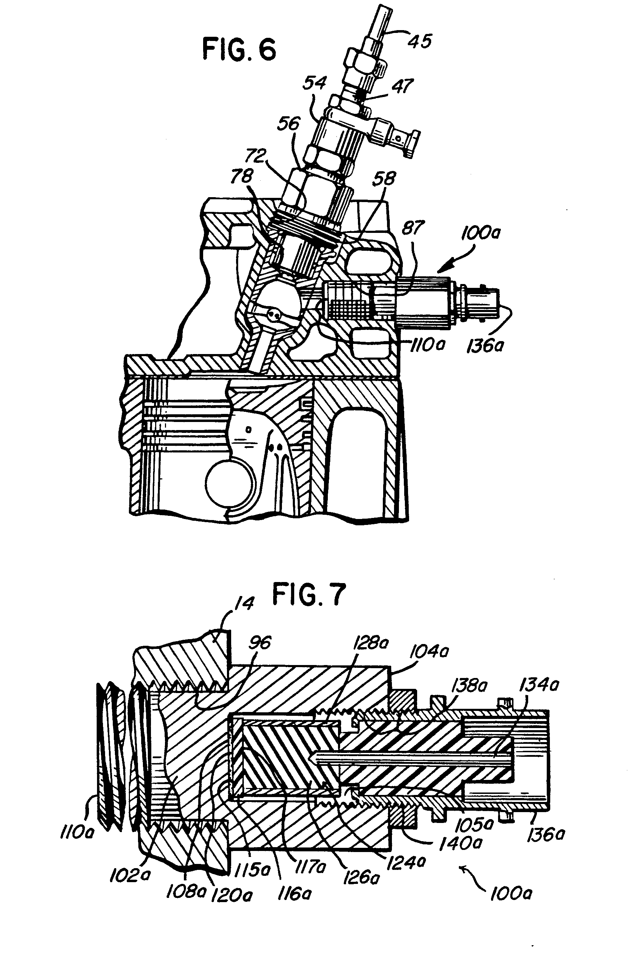

The positioning and bonding of the piezoelectric disc 106 within its receptacle is similar to that disclosed for the washer or O-shaped transducer shown in Figs. 6a and 6b of the aforesaid U. S. Patent No. 4,036,050. The disc 106 is typically a ceramic crystal structure possessing piezoelectric properties, i.e., the ability to produce a voltage when subjected to a change in mechanical stress acting in a specific orientation with respect to the crystallographic axis of the material. Materials such as Mallory P.C. 5 or Clevite P.Z.T. 5 have proven suitable for this purpose. Typical materials of this type have two parallel major surfaces between which the stress-responsive voltage is developed. In the embodiment shown in FIGS. 2 and 3, the lower surface 106a of the disc 106 is bonded by a conductive adhesive 114 to the bottom 108 of the washer 100, while its upper surface 106b is electrically coupled by means of a coaxial cable 116 to monitoring apparatus (described below) through a BNC type electrical connector 117. The coaxial cable 116 connecting the crystal surface 106b to the connector 117 has an inner conductor 119 electrically bonded to the face 106b, an insulator 121 and an outer ground sheath 123 coupling the metal housing 112 to the exterior shell of the BNC terminal 117. The adhesive 114 bonding the disc 106 to the surface 108 is preferably of a type which maintains electrical contact between the disc 106 and the surface 108 through the wide variations of temperature encountered during normal operation of the engine. Mounted on the surface 108 as described, the disc 106 is flexed or bent as a result of axial pressures acting along the body of the shank 92 during pressure changes within the combustion chamber 42.  At the same time, pressures exerted radially from within the shank 92 have little or no effect on the disc 106. Likewise, vibration from the engine itself has been found to have little or no effect on the signal developed by the transducer.  In other words, the output signal developed by the disc 106, results from actual cylinder pressure changes.  A detailed discussion of this signal is presented below.  The piezoelectric surface 106b is held in compression and insulated from the remainder of the housing 104 by a filler 120 of nonconductive material such as epoxy or the like.

The transducer 100 may be formed in a variety of different shapes within the scope of the present invention.  Whereas the outer shell portion 108 is shown in a general U-shape, the shell could also be square, rectangular, oval or any of a variety of other planar shapes so long as the opening for surrounding the nozzle or plug shank is properly sized.  It has been found desirable, however, to keep the size of the transducer relatively small and substantially symmetrical about its center axis so that its mass does not cause spurious signals from the piezoelectric element due to flexure of the housing during vibrations of the engine.

If the transducer 100 is U-shaped, insertion on and removal from the glow plug is greatly facilitated. Ease of insertion and removal is an important factor for detecting pressure variations in the cylinder under the wide range of possible conditions existing in the field.

In the absence of the transducer 100, the glow plugs of diesel engines, as well as spark plugs in carbureted engines, seat internal to their receptacle along the periphery of an internal surface of the plug such as the surface 93, the enlarged head portion of the plug serving primarily to facilitate engagement of the plug by a wrench. In the present instance, however, the thickness of the transducer 100 must be sufficient to ensure that the enlarged head portion of the glow plug seats firmly against the transducer assembly 100 so as to compress the transducer against the flat outer face of the compression head. Properly sized, the transducer 100 is thick enough to just prevent the normal seating of the plug against the internal surfaces of the plug receptacle while being thin enough to allow the plug to extend far enough into its receptacle so as to facilitate normal operation of the plug. In this manner it is insured that the full force exerted on the glow plug during tightening into its receptacle impacts on the transducer assembly 100 as shown by the force arrow F in Fig. 1. Any pressure created within the cylinder thus momentarily relaxes the seating pressure exerted on the transducer 100 by the enlarged hex head portion of the glow plug. This momentary relaxation of the pressure on the transducer 100 creates flexure of the piezoelectric element 106 to produce the desired output signal on the line 116. Signals created in this manner have been found to be highly representative of pressure variations within the cylinder.

Various filler pieces or stand-off devices may be provided between the transducer and the outer face of the engine to ensure that a flat surface is provided against which the piezoelectric transducer 100 may be compressed. These devices may be integral with or separate from the transducer housing.

For the purpose of utilizing the transducer output signal to provide a visual indication of engine performance, various output devices including a CRT display, tachometer and timing circuits, as shown in FIG. 5, are provided. The transducer 100 provides an output pulse during each power cycle of the engine. Because a piezoelectric transducer is sensitive to electrical loading, an isolation amplifier 144 having a high-impedance input is provided to receive the signal from the transducer 100. For diagnosing problems arising within the cylinder 18, the pressure-time characteristic during the power cycle of the individual cylinder 18 is of interest. The transducer apparatus of the present invention is of particular value for the more demanding monitoring applications where an accurate tracking of cylinder pressure variations is important. To this end the circuit of FIG. 5 is shown with an output indicator in the form of a CRT display 160 having an input 162 coupled to receive the output of the isolation amplifier 144 for display on a conventional CRT screen 168. The display may be a standard oscilloscope or any other display having a capability to synchronize automatically to the time base of the input signal. Alternately the display may have its horizontal sweep triggered from or synchronized to an externally developed signal such as may be derived from the flywheel pick-up disclosed below or from various timing pulses existing within the transducer output signal itself. A grid impressed on the screen 168 provides proper calibration. The amplitude of the signal at any given point above the zero axis varies with changes in the instantaneous pressure within the cylinder 18.

The pressure-time curves shown in FIG. 4 represent performance of the same cylinder under two separate conditions. The broken line or curve 170 represents the cylinder-pressure-time curve during operation of the cylinder 18 with the fuel source to the cylinder 18 interrupted, while the solid line or curve 172 represents the cylinder-pressure-time-curve with the fuel injection system for the cylinder 18 operative. From the broken-line trace 170 it is seen that during interruption of the fuel source to the cylinder 18, the pressure change within the pre-combustion chamber 44 and combustion chamber 42 (FIG. 1) results only from the contraction and expansion of the volume of the chamber 42 during one cycle of the piston 16. The point at which the piston 16 achieves the position of top dead center (TDC) can be seen to occur when the pressure is at its highest point, as indicated at 174 in FIG. 4. For timing purposes the point TDC has substantial significance.

When the fuel injection system is operative, a substantially different pressure-time relationship ensues, as shown by the curve 172. The curve 172 rises similar to the curve 170 during upward travel of the piston 16 and before fuel injection. A high frequency oscillation, typically at 2000 to 3000 Hz., indicated at 176, occurs as a result of spring chatter in the injection nozzle 46 during the nozzle opening period. As noted above, the transducer output signal varies in response to each of the changes in the pressure-time curve here discussed and as such, the mechanical events giving rise to these changes are detectable from the signal. Absence of the spring chatter is an indication of a faulty nozzle. Observance of a change in these oscillations or a shift in time of these oscillations with respect to the time of TDC is also indicative of a faulty nozzle. As fuel is injected into the cylinder 18, the pressure within the cylinder increases rapidly, as shown at 178, until peak firing pressure occurs at point 180.

Still further information can be obtained by providing each of the cylinders of an engine with a separate transducer and by viewing the output signals from each cylinder on separate traces of a single scope using a common time base synchronized to the signal from any one of the cylinders. Relative timing and amplitude information for each signal may be viewed on the CRT screen to give a valuable indication of trouble spots or excessive wear in one or more cylinders which might result in deteriorating performance from the engine as a whole.

The transcribers of the present invention have been found to develop a far cleaner, less noisy and hence more accurate electrical representation of the pressure variations within the cylinder head than had been available with previous transducers known to the inventors.

To utilize the unusually high quality of the transducer signal developed herein, circuit means have been provided for extracting and utilizing the important timing information available from the signal and in particular the indications of nozzle opening "chatter" that exist on the transducer output signal. To this end, the circuitry shown in FIG. 5 includes circuits for processing the signal derived from the transducer in alternate paths. The first path of processing includes a filter 184 of the bandpass variety which is adapted to separate the audio frequency oscillations (2000-3000 hertz) that result from the nozzle "chatter" during opening. In this mode of operation, termed the "nozzle opening advance mode," or OA mode, the output of the filter 184 is fed through a threshold detector 186 which produces an output pulse only if the level of activity in the desired frequency range detected by the bandpass filter 184 is above a predetermined minimum. The output pulse from the threshold detector 186, therefore, rises at the beginning of the opening of the injector nozzle and falls at the completion of the opening of the injector nozzle. Once the nozzle is fully opened, the "chatter" subsides. In this OA mode this nozzle opening signal passes to a pulse shaper 190 and thence to one input of a flip-flop 192. The other input to the flip-flop 192 is provided by a pulse derived from a flywheel attachment 194 for detecting the top dead center position on the flywheel. Typically, the flywheel top dead center position is indicated by an irregularity such as a mark or a raised portion on the flywheel which is detectable by an inductive or optical detector mounted to the

0013702

-16-

flywheel housing. The signal from the flywheel TDC detector 194 is shaped in an amplifying pulse shaper circuit 196 prior to its transmission to the flip-flop or bistable circuit 192. The output from the bistable circuit 192 is in the shape of a pulse having a width which is proportional to the time delay between nozzle opening and the achievement of the top dead center position by the flywheel of the engine. This pulse is fed to a pulsewidth-to-digital converter 198 which in turn drives a digital or analog readout 200 to provide the operator with an indication of nozzle opening advance. What has been described thus far is the injection "OA" mode of operation.

The pulsewidth-to-digital converter circuit may be a simple integrator plus an analog-to-digital converter. Another pulsewidth-to-digital converter circuit gates high frequency clock pulses to a binary counter during the duration of the output pulse from the bistable circuit 192. Thereafter the digital readout 200 provides a decimal number on a suitable visual display to the operator. The output may be calculated in degrees of crankshaft rotation or in milliseconds of actual delay, depending on the application.

A conventional tachometer circuit and readout 204 is coupled to the output lead of the threshold detector 186 and provides an accurate indication of engine speed when properly calibrated. In any event, the provision of a tachometer alone or simultaneous with an indication of the nozzle opening advance gives a valuable indication of engine performance.

As still a further combination of components within the scope of the present invention, the transducer may be combined with and provide a signal to the timing circuitry shown in the copending application of Edward Yelke Serial No. 913,826 filed June 8, 1978. The disclosure of the timing circuit in that application is incorporated

-17-

herein by reference.  In this latter combination, the
transducer is utilized to effect the selectively delayed
strobe of the timing light in a manner more fully described
in the aforesaid Yelke application.

Since the transducer disclosed above does not
interfere with the normal operation of the engine cylinder
which is being monitored, a wide variety of new diagnostic
applications are made possible.  For example, a semi-
permanent installation of the transducer 100 to a plug
could be combined with an on-board digital counter for
tallying engine revolutions.  For warranty purposes the
counter output could be monitored on a readout in decimal
or coded form or stored for readout by the dealer or
factory at the time a warranty claim is made.  Similarly,
the transducer may be installed as part of an on-board
computing system for automatically correcting pump advance,
as desired, for maximum fuel economy, for maximum power,
or for ease of starting.  For this application the readout
200 is replaced by a suitable computing device plus
appropriate mechanical linkage, servos or other drivers
to control injection pump advance.

An alternate spark or glow plug transducer
construction is shown in FIGS. 6 and 7, wherein there is
depicted a transducer adapted and designed to replace the
conventional glow plug within the cylinder of a diesel.
The transducer is in the form of an elongated bolt-shaped
structure having a shank portion extending into the
cylinder to act as a pressure detecting face and an
expanded head portion which seats against the engine
itself and includes a cavity for housing a piezoelectric
element.  The element is located parallel to and in
proximity with the plane at which the enlarged head seats
against the engine and is held under tension by a plug of
conductive rubber which, in turn, transmits the signal
from the piezoelectric element to the central conductor
of a BNC-type coaxial connector.

More specifically a transducer device 100a of appropriate sensitivity is substituted for the glow plug 90. Axial forces on the transducer assembly 100a created by pressure changes within the pre-combustion chamber 44 are thereby detected external to the engine housing to facilitate convenient and economical performance monitoring. To these ends, the embodiment depicted in FIG. 6 includes a transducer 100a shown mounted in the receptacle 87.

As shown in more detail in FIG. 7, the transducer 100a is in the form of an elongated bolt-shaped device having a threaded shank portion 102a which extends toward the pre-combustion chamber 44 and is sized to replace the glow plug 90 in the receptacle 87 and to enter into screw-type engagement with the threaded portion 96 thereof. The transducer 100a also has an expanded head portion 104a which seats against the compression head 14 itself. A cavity 105a extends along the axis of the receptacle 87 with the bottom surface 108a of the cavity being substantially parallel to and in proximity with the plane at which the enlarged head 104a seats against the compression head 14. The forward end of the shank 102a is relatively blunt and extends into the receptacle 87 to provide a pressure detecting face 110a. A disc 116a of piezoelectric material is connected to the bottom surface 108a of the cavity 105a by a conductive adhesive layer 120a. The disc 116a is at or near a point of flexing which, in this instance, is adjacent the point where the head portion 104 seats against the compression head 14.

The positioning and bonding of the piezoelectric disc 116a within its receptacle is similar to that disclosed for the cap screw embodiment of the aforesaid U.S. Patent No. 4,036,050. The disc 116a is typically a ceramic crystal structure possessing piezoelectric properties, i.e., the ability to produce a voltage when subjected to changes in mechanical stress acting in a specific orientation with respect to the crystallographic axis of the material.

Materials such as Mallory P.C. 5 or Clevite P.Z.T. 5 have proven suitable for this purpose. Typical materials of this type have two parallel major surfaces between which the stress-responsive voltage is developed. In the embodiment shown in FIGS. 6 and 7, the forward surface 115a of the disc 116a is bonded by a conductive adhesive 120a to the bottom 108a of the cavity 105a, while its rear surface 117a is electrically coupled to monitoring apparatus such as that described above and shown in FIG. 4. The adhesive 120a bonding the disc 116a to the surface 108a is preferably of a type which maintains electrical contact between the disc 116a and the surface 108a through the wide variations of temperature encountered during normal operation of the engine. Mounted on the surface 108a as described, the disc 116a is flexed or bent as a result of axial pressures acting along the body of the shank 102a during pressure changes within the combustion chamber 42. At the same time, pressures exerted radially from within the shank 102a have little or no effect on the disc 116a. Likewise, vibration from the engine itself has been found to have little or no effect on the signal developed by the transducer.

It has been found that the quality of the transducer output signal is greatly enhanced by the fact that the piezoelectric element 116a is held in compression in a position substantially parallel to and in proximity with the plane at which the enlarged head 104a seats against the compression head 14. In accordance with another aspect of the present invention the piezoelectric element 116a is held in compression by one end of a plug 124a of conductive material which engages the disc 116a at the primary point of stress and flexure of the transducer 100a due to changes in pressure of the pre-combustion chamber 44 and combustion chamber 42. To ensure that the primary stress and flexure of the transducer head occurs where the enlarged head 104a seats against the compression head 14, the transducer 100a is made shorter in shank length than the replaced glow plug. Unable to seat against the internal end of the glow plug receptacle, the entire inward force exerted by the plug on the compression head occurs at the interface between the enlarged head portion 104a and the engine. Increased pressure from within the cylinder relaxes the pressure at this interface to flex the piezoelectric element 116a and create an output signal. To ensure that the plug 124a is insulated from contact with the walls of the transducer head the plug 124a has a conductive core 126a surrounded by an insulator 128a. The core 126a is preferably formed of a conductive rubber such as SC-Consil, an electrically semi-conductive silicone elastomer manufactured by Tecknit of Cranford, New Jersey. The insulator 128a is preferably a thin-walled heat shrinkable insulating tubing, e.g., Type L-79F of Amp Special Industries of Valley Forge, Pennsylvania. At the other end of the plug 124a the conductive core 126a is pierced by the central conductor 134a of a BNC-type coaxial connector 136a. The rear portion 138a of the walls of the cavity 105a is threaded for screw-type engagement with a threaded portion 140a of the connector 136a. The output voltage developed at the piezoelectric element 116a is transmitted through the conductive core 126a to the central conductor 134a of the BNC-type connector 136a and from there to suitable monitoring apparatus.

Alternatively, the connector 136a can be replaced by a nylon or other insulating bolt having a centrally disposed metal screw which extends axially into engagement with the conductive rubber plug core 126a to extract the electrical signal from the surface 117a of the disc 116a. A suitable connector attached to the head of the screw can then take the signal from the screw for connection to the monitoring apparatus.

The output signal for the glow plug replacement transducer described above can be used with any of the monitoring apparatus described above for use with the U-shaped washer transducer with equal effectiveness.

From the foregoing, it is seen that there has been brought to the art in the present invention monitoring apparatus which is at the same time inexpensive and highly effective in detecting pressure changes internal to a fuel-injected cylinder. In addition, the method and apparatus disclosed herein is applicable or adaptable to a wide variety of engines, including both diesel and carbureted engines, and requires no modification of existing engine components.

While the invention has been described in connection with certain preferred embodiments, it will be understood that it is not intended that the invention be limited to those embodiments. On the contrary, we intend to cover all alternatives, modifications and equivalents as may be included within the spirit and scope of the invention as defined by the appended claims.

What is claimed is:

1.    A transducer for developing an electrical signal in response to pressure variations within the combustion chamber of an engine of the type having a) a threaded port extending from the combustion chamber to the outer surface of the engine and b) a glow or spark plug having a shank portion threaded into said port and an enlarged head portion exterior to said shank portion, said transducer comprising:

a housing sized and shaped for insertion around said shank portion while underlying said enlarged head portion, said housing having a thickness sufficient to ensure that said glow or spark plug head portion compresses said housing against said engine and seats against said housing;

a piezoelectric element disposed within said housing for developing an electrical signal in response to pressure variations on said glow or spark plug from within said combustion chamber; and

terminal means for transmitting the electrical signal from said piezoelectric element.

2.   A transducer for developing an electrical signal in response to pressure variations within the combustion chamber of an engine of the type having a port which is at least partially threaded extending from said combustion chamber through the engine and a glow or spark plug having a shank portion threaded into said port and an enlarged head portion, said transducer comprising;

a substantially flat U-shaped element sized and shaped for insertion around the shank portion of said glow or spark plug while substantially underlying the expanded head portion of said glow or spark plug, said U-shaped element being of sufficient thickness to ensure that the enlarged head portion of said plug seats firmly against said element;

a piezoelectric crystalline element sandwiched within said U-shaped element for producing an electrical signal in response to axial pressure variations on said glow or spark plug from within said combustion chamber; and

output terminal means for transmission of said electrical signal.

3.    In combination with a diesel engine of the type having a combustion chamber associated with each cylinder and a threaded port from each combustion chamber to the outer surface of the engine into each of which is inserted a glow or spark plug having a shank portion threaded into said port and an enlarged head portion exterior to said shank portion and a transducer for developing an electrical signal in response to pressure variations within a combustion chamber, said transducer comprising

a housing sized and shaped for insertion around said shank portion and underlying said enlarged head portion, said housing having a thickness sufficient to ensure that said glow or spark plug head portion compresses said housing against said engine and seats against said housing;

a piezoelectric element disposed within said housing for developing an electrical signal in response to pressure variations on said glow or spark plug from within the combustion chamber; and

terminal means for transmitting the electrical signal from said piezoelectric element.

4. A monitoring system for fuel injected engines of the type having a spark or glow plug threaded into a port extending through the engine into the cylinder combustion chamber, said monitoring system comprising: a pressure transducer adapted to substantially surround said spark or glow plug and be compressed by said spark or glow plug against the engine so as to develop an electrical signal containing information corresponding to changes in axial pressure on said spark or glow plug from within said combustion chamber; circuit means for processing said electrical signal; and output indicating means coupled to said circuit means for providing a visual indication of at least a portion of said information.

5. A method for dynamically monitoring the performance of an internal combustion engine of the type having at least one spark or glow plug threaded into a receptacle which extends from the outside of the engine into a cylinder combustion chamber and which plug has an enlarged head portion exterior to said engine, said method comprising the steps of: at least partially unscrewing said plug from its receptacle so as to unseat said plug from the engine; inserting around said plug a pressure responsive transducer which is shaped to fit around said plug between said enlarged plug head portion and the outer face of said engine; screwing said plug back into its receptacle until the enlarged head portion compresses said transducer against the outer face of said engine so that axial pressures on said plug from within said cylinder create pressure variations on said transducer which generate a transducer output signal.

6. A transducer assembly for developing an electrical signal indicative of pressure variations within the combustion chamber of an engine of the type having a) an at least partially threaded port extending from said combustion chamber to the exterior of said engine and b) a spark or glow plug threaded into said port and having a shank portion extending into said receptacle and an enlarged head portion exterior to said engine, said assembly comprising:

spacer means adapted to be compressed between said enlarged plug head portion and the exterior of said engine, said spacer means having sufficient thickness to prevent seating of said shank portion interior to said engine port; and

a pressure responsive transducer element coupled to said spacer means and compressable therewith between said enlarged plug head portion and said engine so as to develop an electrical signal in response to pressure variations acting axially along said plug.

7. For use in a diagnostic system for a diesel engine of the type having a combustion chamber associated with each cylinder and a threaded port extending from each combustion chamber to the outer surface of the engine which is adapted to accept a glow plug, a transducer assembly comprising a metal housing having a shank portion threaded for a screw-type engagement with said threaded port and a head portion external to said shank portion and having a recessed cavity extending along the axis of said port, said shank portion having a forward end for extending into said port and acting as a pressure face within the cylinder and closing the inside surface of said cavity transverse to the axis of the port, said metal housing at least partially seating against said engine at said head portion and a piezoelectric element coupled to the inner end of the cavity in substantially the same plane in which said head portion is seated against said engine so as to develop an electrical signal during flexure of said housing resulting from pressure against said pressure face, and an electrical output means coupled to the outer end of said piezoelectric element for transmitting the electrical signal from said element.

0013702

-28-

8. For use in a diagnostic system for a diesel engine of the type having threaded ports extending outward from each cylinder for normally receiving a glow plug which aids ignition, a transducer assembly adapted to substitute for a glow plug and to seat in said glow plug receptacle in a plane transverse to the axis of the receptacle, said transducer assembly having a blunt forward end which is cylindrical in shape and threaded to conform to the complementary threads of said glow plug receptacle, said transducer assembly further having a rearward end coupled to an electrical output end and a cavity formed in from the rearward end of said transducer and a piezoelectric element fixed in a plane transverse to the axis of said glow plug receptacle and affixed to the forward end of said cavity for developing an electrical output signal in response to pressure changes acting on the forward end of said transducer assembly from within the cylinder.

9.    A transducer for developing electrical signals in response to pressure in a chamber having a port from te outside of the housing to the chamber, comprising a body in engagement with the housing at the port having

a first surface thereon serving as a pressure-sensing face extending into the port;

a second surface thereon for at least partially seating against the housing at the port therein;

a cavity in said body extending from outside the chamber toward said pressure-sensing face and having an inner surface which is in proximity with said seating surface and is transverse to said port;

a piezoelectric element on the inner surface of said cavity for developing an electrical signal responsive to flexing of said housing due to pressure changes in the chamber;

a compressible plug disposed in said cavity and having a core of conductive elastomeric material and an outer sheath of insulating material, said sheath being open on opposing ends so that on one end the conductive material is adapted to contact the piezoelectric element;

means for compressing said plug within said cavity so that the conductive core contacts with said piezoelectric element; and

output terminal means coupled to the conductive core at the opposing end of said plug for receiving the electrical signal from said piezoelectric element.

-30-

10. A method for detecting force waves in solid metal objects comprising the steps of forming a cylindrical cavity in the metal such that the axis of the cavity is substantially perpendicular to the movement of the force wave to be detected,

placing at the inner end of said cavity a flat piece of piezoelectricl material having a first face in electrical contact with the inner end of said cavity and the second and opppsite face facing outward from said cavity,

inserting into said cavity from its outer end an element comprising an inner core of conductive material within an outer sleeve of insulating material which surrounds said conductive material except for the forward and rearward ends thereof, the forward end of said conductive material being uninsulated and adapted to be pressed against the outward facing portion of said piezoelectric element;

positioning in said cavity a coaxial fitting of the type having a protruding central conductor shaft supported in spaced insulated relation to an outer cylindrical conductor, the central shaft of said coaxial fitting being adapted to conductively engage the rearward end of the conductive core upon positioning of said coaxial end fitting into said cavity, whereby said conductive core is compressed between the outward face of said piezoelectric element and said central conductor shaft of the coaxial fitting so as to provide an output terminal for the signal which develops in the piezoelectric material in response to the force waves.

FIG. 1

FIG. 2

FIG. 3

FIG. 4

FIG. 5

**FIG. 6**

**FIG. 7**

European Patent Office

**EUROPEAN SEARCH REPORT**

Application number

EP 79 10 4455

## DOCUMENTS CONSIDERED TO BE RELEVANT

| Category | Citation of document with indication, where appropriate, of relevant passages | Relevant to claim |
|---|---|---|
| X | <u>CA - A - 908 745</u> (F. SEMPELS et al.)<br>* Page 4, lines 7-19; figures 3 and 3a * | 1-6 |
| X | <u>DE - C - 746 666</u> (DEUTSCHE VER-<br>SUCHSANSTALT FÜR LUFTFAHRT E.V.)<br>* Page 3, lines 19-48; figures 1,3 * | 1-6 |
| X | <u>US - A - 3 020 763</u> (V.C. DAVIS)<br>* Column 2, lines 9-65; figure 1 * | 1-6 |
| | <u>GB - A - 835 158</u> (BRUCE PEEBLES & CO. LTD.)<br>* Page 3, lines 13-118; figures 1,2 * | 1 |
| D | <u>US - A - 4 036 050</u> (J.L. DOOLEY et al.)<br>* Abstract; figures 8,8a * | 2 |
| | <u>US - A - 3 801 838</u> (W.P. KISTLER)<br>* Abstract; figures 4,5 * | 7-10 |
| P | <u>US - A - 4 169 388</u> (B.R. TEITEL-<br>BAUM et al.)<br>* Abstract; figures 1,3,4 * | 1-6 |

./.

**CLASSIFICATION OF THE APPLICATION (Int. Cl. 3)**

G 01 M 15/00
G 01 L 23/10
            23/22

**TECHNICAL FIELDS SEARCHED (Int.Cl. 3)**

G 11 L 23/10
             23/22
             23/24
             9/08
             1/16
             9/00
G 01 M 15/00
G 01 B  7/16
G 01 P 15/09

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 03-03-1980 | VAN ASSCHE |

EPO Form 1503.1  06.78

European Patent
Office

**EUROPEAN SEARCH REPORT**

Application number

EP 79 10 4459

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| P | AUTOMOTIVE ENGINEERING, vol. 87, no. 5, May 1979, pages 63-65 New York, U.S.A. "Piezoelectric sensor determines cylinder pressures"  * Complete document *  ---- | 1-6 | |
| | | | TECHNICAL FIELDS SEARCHED (Int. Cl. 3) |

EPO Form 1503.2  06.78